Europäisches Patentamt

European Patent Office

Office européen des brevets

(11) Veröffentlichungsnummer: **0 240 877**
**B1**

(12) **EUROPÄISCHE PATENTSCHRIFT**

(45) Veröffentlichungstag der Patentschrift:
20.12.89

(21) Anmeldenummer: 87104612.4

(22) Anmeldetag: 27.03.87

(51) Int. Cl.⁴: **B23Q 11/08**

(54) Teleskopabdeckung.

(30) Priorität: 07.04.86 DE 3611576

(43) Veröffentlichungstag der Anmeldung:
14.10.87 Patentblatt 87/42

(45) Bekanntmachung des Hinweises auf die Patenterteilung:
20.12.89 Patentblatt 89/51

(84) Benannte Vertragsstaaten:
CH DE FR IT LI

(56) Entgegenhaltungen:
DE-A- 2 348 503
DE-C- 3 330 298

(73) Patentinhaber: **Gebr. Hennig GmbH, Dorfstrasse 41,
D-8045 Ismaning(DE)**

(72) Erfinder: **Bierbrauer, Heinrich, Ortlindenstr. 13,
D-8000 München 81(DE)**
Erfinder: **Diels, Wolfgang, Pfitznerstrasse 11,
D-8000 München 40(DE)**

(74) Vertreter: **Tetzner, Volkmar, Dr.-Ing. Dr. jur.,
Van-Gogh-Strasse 3, D-8000 München 71(DE)**

ACTORUM AG

**Beschreibung**

Die Erfindung betrifft eine Teleskopabdeckung entsprechend dem Oberbegriff des Anspruches 1.

Eine Teleskopabdeckung gemäß dem Oberbegriff des Anspruches 1 ist durch Fig. 6 der DE-C 3 330 289 bekannt. Hierbei ist zur pendelnden Lagerung der Stützrolle auf einer fest mit dem Abdeckkasten verbundenen Achse eine Kugel drehbar gelagert, die von einem in die Stützrolle eingesetzten Lagerring umgeben wird, der die Kugel mit einer hohlkugeligen Lagerfläche teilweise umfaßt. Um die Pendelbewegungen der Stützrolle zu begrenzen und sicherzustellen, daß die Stützrolle parallel zur Verschieberichtung abrollt, sind beidseitig der Stützrolle, mit Abstand von den Stirnflächen der Stützrolle, Führungsplatten vorgesehen.

Nachteilig ist bei diese Ausführung vor allem die hohe Flächenpressung und der dadurch bedingte starke Verschleiß an den verhältnismäßig kleinen kugel- bzw. hohlkugelförmigen Lagerflächen. Ungünstig ist ferner der komplizierte Aufbau der Stützrollenlagerung.

Der Erfindung liegt daher die Aufgabe zugrunde, eine Teleskopabdeckung entsprechend dem Oberbegriff des Anspruches 1 so auszubilden, daß der konstruktive Aufbau vereinfacht und der Verschleiß an den Lagerflächen verringert wird.

Diese Aufgabe wird erfindungsgemäß durch das kennzeichnende Merkmal des Anspruches 1 gelöst.

Zweckmäßige Ausgestaltungen der Erfindung sind Gegenstand der Unteransprüche.

Ein Ausführungsbeispiel der Erfindung ist in der Zeichnung veranschaulicht. Es zeigen

Fig. 1 eine schematische Stirnansicht der erfindungsgemäßen Teleskopabdeckung,

Fig. 2 eine Detaildarstellung von Stützrolle, Stützteil und Rückwand.

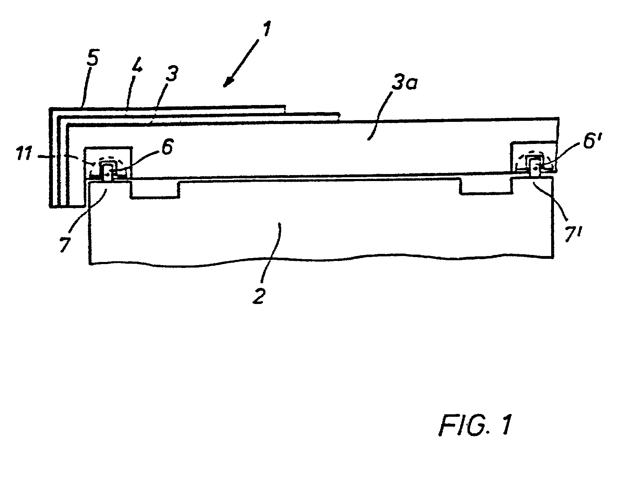

Die in Fig. 1 ganz schematisch veranschaulichte Teleskopabdeckung 1 dient zum Schutz der Führungsbahn 2 einer Werkzeugmaschine. Sie enthält mehrere teleskopartig verschiebbare Abdeckkästen, von denen in der Zeichnung der Einfachheit halber nur drei Abdeckkästen 3, 4, 5 dargestellt sind.

Der Abdeckkasten 3 stützt sich mit seiner Rückwand 3a über zylindrische Stützrollen 6, 6' auf parallel zur Führungsbahn 2 verlaufende Rollbahnen 7,7' ab. Entsprechenderweise stützen sich auch die weiteren Abdeckkästen 4, 5 mit ihrer Rückwand über zylindrische Stützrollen auf den Rollbahnen 7,7' ab.

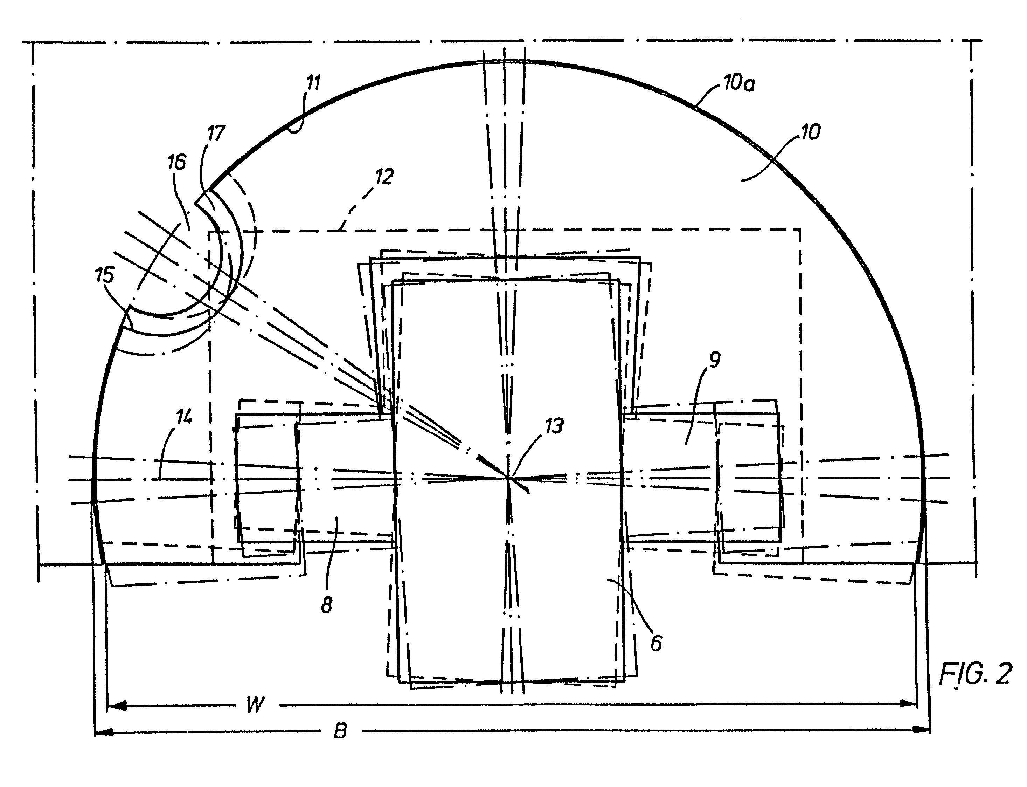

Im folgenden wird anhand von Fig.2 die Lagerung der Stützrolle 6 im einzelnen erläutert, die übrigen Stützrollen sind in entsprechender Weise gelagert.

Die Stützrolle 6 bildet den Außenring eines Lagers, dessen Innenring über Zapfen 8, 9 mit einem Stützteil 10 fest verbunden ist, der an seiner Oberseite eine kreisbogenförmige Außenkontur 10a aufweist.

Dieser Stützteil 10 stützt sich mit seiner kreisbogenförmigen Außenkontur 10a am Boden einer gleichfalls kreisbogenförmigen Nut 11 der Rückwand 3a ab. Die Nut 11 wird auf der Vorder- und Rückseite der Rückwand 3 durch ein Abdeckblech begrenzt, das in Fig.2 der besseren Übersicht halber weggelassen ist und das einen in Fig.2 durch die gestrichelte Linie 12 angedeuteten Ausschnitt zur Aufnahme der Stützrolle 6 besitzt.

Der Krümmungsmittelpunkt der Außenkontur 10a des Stützteiles 10 und der Krümmungsmittelpunkt der Nut 11 fallen mit dem Mittelpunkt 13 der Stützrolle 6 zusammen.

Betrachtet man die Richtung, in der sich die Abdeckkästen 3, 4, 5 im Betrieb bewegen (senkrecht zur Zeichenebene der Fig.1) als Verschieberichtung, so ist die Stützrolle 6 einerseits um eine quer zur Verschieberichtung verlaufende erste Achse 14 drehbar und andererseits zusammen mit dem Stützteil 10 um eine in Verschieberichtung verlaufende zweite Achse (durch den Mittelpunkt 13 senkrecht zur Zeichenebene der Fig.2 verlaufend) schwenkbeweglich.

Würden die Stützrolle 6 und der Stützteil 10 aus der neutralen Mittellage im Uhrzeigersinn verschwenkt, so ergibt sich beispielsweise die in gestrichelten Linien angedeutete Stellung. Eine mögliche Position bei einer Schwenkbewegung im Gegenuhrzeigersinn ist strichpunktiert dargestellt.

Die kreisbogenförmige Außenkontur 10a des Stützteiles 10 weist eine Ausnehmung 15 auf, in die ein in der Nut 11 der Rückwand 3a vorgesehener Vorsprung 16 unter Belassung eines die Schwenkbeweglichkeit des Stützteiles 10 ermöglichenden Zwischenraumes 17 eingreift. In den durch gestrichelte bzw. strichpunktierte Linien veranschaulichten Endlagen der Schwenkbewegung von Stützrolle 6 und Stützteil 10 kommt die Ausnehmung 15 zum Anschlag am Vorsprung 16. Dadurch wird die Schwenkbewegung der Stützrolle 6 auf das für den Betrieb der Teleskopabdeckung notwendige Maß begrenzt.

Wie Fig.2 erkennen läßt, ist der Umfangswinkel der kreisbogenförmigen Nut 11 der Rückwand 3a geringfügig größer als 180°. Der Umfangswinkel der kreisbogenförmigen Außenkontur 10a des Stützteiles 10 beträgt mindestens 180°; beim dargestellten Ausführungsbeispiel ist dieser Umfangswinkel der Außenkontur 10a genauso groß wie der Umfangswinkel der Nut 11.

Die Weite W der Nut 11 am öffnungsseitigen unteren Ende der Nut ist daher geringfügig kleiner als die maximale Breite B des Stützteiles 10. Auf diese Weise wird verhindert, daß die Stützrolle 6 und der Stützteil 10 in der neutralen Mittelstellung aus der Nut 11 nach unten herausfallen können, wenn die Teleskopabdeckung 1 beispielsweise auf die Führungsbahn 2 aufgesetzt oder von ihr abgenommen wird.

Zweckmäßig werden jedoch die Maße B und W sowie die Breite des Zwischenraumes 17 so bemessen, daß sich die Stützrolle 6 mit dem Stützteil 10 frei nach unten aus der Nut 11 herausziehen läßt, nachdem sie zuvor in eine der beiden Endlagen geschwenkt wurde. Auf diese Weise ist im Bedarfsfalle ein besonders einfaches Auswechseln der Stützrollen 6 möglich.

**Patentansprüche**

1. Teleskopabdeckung (1) für die Führungsbahn (2) einer Werkzeugmaschine, enthaltend mehrere teleskopartig verschiebbare Abdeckkästen (3, 4, 5), die sich mit ihrer Rückwand (z.B. 3a) über zylindrische Stützrollen (6, 6') auf parallel zur Führungsbahn (2) verlaufenden Rollbahnen (7, 7') abstützen, wobei jede Stützrolle um eine quer zur Verschieberichtung verlaufende erste Achse (14) drehbar in einem Stützteil (10) gelagert und um eine in Verschieberichtung sowie durch den Mittelpunkt (13) der Stützrolle (6) verlaufende zweite Achse begrenzt schwenkbeweglich ist, gekennzeichnet durch folgende Merkmale:
   a) der Stützteil (10) weist an seiner der Führungsbahn (2) abgewandten Außenseite eine kreisbogenförmige Kontur (10a) auf, deren Krümmungsmittelpunkt mit dem Mittelpunkt (13) der Stützrolle (6) zusammenfällt;
   b) mit dieser kreisbogenförmigen Außenkontur (10a) stützt sich der relativ zur Rückwand (3a) begrenzt schwenkbewegliche Stützteil (10) am Boden einer kreisbogenförmigen Nut (11) der Rückwand (3a) ab, deren Krümmungsmittelpunkt ebenfalls mit dem Mittelpunkt (13) der Stützrolle (6) zusammenfällt.

2. Teleskopabdeckung nach Anspruch 1, dadurch gekennzeichnet, daß der Umfangswinkel der kreisbogenförmigen Nut (11) der Rückwand (3a) geringfügig größer als 180° ist und der Umfangswinkel der kreisbogenförmigen Außenkontur (10a) des Stützteiles (10) mindestens 180° beträgt, so daß die Weite (W) der Nut (11) am öffnungseitigen, der Führungsbahn zugewandten Ende geringfügig kleiner als die maximale Breite (B) des Stützteiles (10) ist.

3. Teleskopabdeckung nach Anspruch 1, dadurch gekennzeichnet, daß die kreisbogenförmige Außenkontur (10a) des Stützteiles (10) eine Ausnehmung (15) aufweist, in die ein in der Nut (11) der Rückwand (3a) vorgesehener Vorsprung (16) unter Belassung eines die Schwenkbeweglichkeit des Stützteiles (10) ermöglichenden Zwischenraumes (17) eingreift.

4. Teleskopabdeckung nach Anspruch 1, dadurch gekennzeichnet, daß die kreisbogenförmige Nut (11) der Rückwand (3a) auf der Vorder- und Rückseite durch ein Abdeckblech begrenzt wird, das einen Ausschnitt (12) zur Aufnahme der Stützrolle (6) besitzt.

**Claims**

1. Telescopic covering (1) for the guide track (2) of a machine tool, comprising a plurality of telescopically movable cover boxes (3, 4, 5) which are supported at their rear wall (e.g. 3a) by cylindrical support rollers (6, 6') on roller tracks (7, 7') which run parallel to the guide track (2), each support roller being rotatably mounted in a support part (10) about a first axis (14) which extends at right angles to the direction of travel and being capable of limited pivotal movement about a second axis which extends in the direction of travel and through the center (13) of the support roller (6), characterized by the following features:
   a) the support part (10) has on its upper face turned from the guide trick (2) a contour (10a) which is an arc of a circle, the centre of curvature of which coinciding with the centre (13) of the support roller (6);
   b) the support part (10) which is capable of limited pivotal movement relative to the rear wall (3a) is supported with this arcuate outer contour (10a) on the base of an equally arcuate groove (11) of the rear wall (3a), the center of curvature of which likewise coinciding with the center (13) of the support roller (6).

2. Telescopic covering as claimed in claim 1, characterized in that the peripheral angle of the arcuate groove (11) of the rear wall (3a) is slightly greater than 180° and the peripheral angle of the arcuate outer contour (10a) of the support part (10) is at least 180°, so that the width (B) of the groove (11) on the open end of the groove adjacent to the guide track is slightly smaller than the maximum width (B) of the support part (10).

3. Telescopic covering as claimed in claim 1, characterized in that the arcuate outer contour (10a) of the support part (10) has a recess (15) in which a projection (16) provided in the groove (11) of the rear wall (3a) engages leaving a space (17) which permits pivotal movement of the support part (10).

4. Telescopic covering as claimed in claim 1, characterized in that the arcuate groove (11) of the rear wall (3a) is limited at the front and rear side by a cover sheet comprising a cutout section (12) to receive the support roller (6).

**Revendications**

1. Chape télescopique (1) de protection de la glissière (2) d'une machine-outil, comprenant plusieurs caissons (3, 4, 5) translatables télescopiquement et dont la cloison arrière (par exemple 3a) prend appui par des galets de support cylindriques (6, 6') sur des chemins de roulement (7, 7') parallèles à la glissière (2), chaque galet de support étant monté rotatif dans une pièce d'appui (10) autour d'un premier axe (14) perpendiculaire à la direction de translation et ayant une liberté limitée d'oscillation autour d'un second axe orienté dans la direction de translation et passant par le centre (13) de ce galet (6), caractérisée par les particularités suivantes:
   a) la pièce d'appui (10) comporte du côté extérieur situé à l'opposé de celui de la glissière (2) un contour (10a) en arc de cercle, dont le sens de courbure coïncide avec le centre (13) du galet de support (6);
   b) la pièce d'appui (10), qui a une liberté limitée d'oscillation par rapport à la cloison arrière (3a), prend elle-même appui par ce contour extérieur en arc de cercle (10a) contre le fond d'une gorge en arc de cercle (11) de la cloison arrière (3a), dont le centre de courbure coïncide également avec le centre (13) du galet de support (6).

2. Chape télescopique de protection selon la revendication 1, caractérisée en ce que l'angle inscrit par la gorge en arc de cercle (11) de la cloison arrière (3a) est légèrement supérieur à 180° et l'angle inscrit par le contour extérieur en arc de cercle (10a) de la pièce d'appui (10) est au moins de 180°, de sorte que la largeur (W) de la gorge (11) à l'extrémité d'ouverture tournée vers la glissière est légèrement inférieure à la largeur maximale (B) de la pièce d'appui (10).

3. Chape télescopique de protection selon la revendication 1, caractérisée en ce que le contour extérieur en arc de cercle (10a) de la pièce d'appui (10) comporte un évidement (15) dans lequel pénètre un bossage (16) prévu dans la gorge (11) de la cloison arrière (3a) en laissant subsister un espace (17) autorisant la liberté d'oscillation de la pièce d'appui (10).

4. Chape télescopique de protection selon la revendication 1, caractérisée en ce que la gorge en arc de cercle (11) de la cloison arrière (3a) est délimitée du côté antérieur et du côté arrière par une tôle de couverture comportant une découpe (12) permettant le logement du galet de support (6).

FIG. 1

FIG. 2

EP 0 240 877 B1